Europäisches Patentamt

European Patent Office

Office européen des brevets

(11) Numéro de publication: **0 002 092**
**B1**

(12) **FASCICULE DE BREVET EUROPEEN**

(21) Numéro de dépôt: 78200303.2

(22) Date de dépôt: 21.11.78

(51) Int. Cl.³: **A 47 J  19/00**, B 26 D  3/18
//F16H19/04

(54) Appareil coupe-légumes.

(30) Priorité: **21.11.77 BE  860999**
**14.12.77 FR  7737599**

(43) Date de publication de la demande:
**30.05.79 Bulletin 79/11**

(45) Mention de la délivrance du brevet:
**18.03.81 Bulletin 81/11**

(84) Etats Contractants Désignés:
**CH DE GB LU NL**

(56) Documents cités:
**CH - A - 353 495**
**FR - A - 2 308 474**
**US - A - 2 008 958**

(73) Titulaire: **ATELIERS DE CONSTRUCTIONS**
**ELECTRIQUES DE CHARLEROI (ACEC) Société**
**Anonyme**
**54, Chaussée de Charleroi**
**B-1060 Bruxelles (BE)**

(72) Inventeur: **Wouters, Louis Victor Jean**
**Avenue Victor Rousseau 189**
**B-1190 Bruxelles (BE)**

(74) Mandataire: **Bossard, Franz et al,**
**ACEC – Service des Brevets Boîte Postale 4**
**B-6000 Charleroi (BE)**

Courier Press, Leamington Spa, England.

## Appareil coupe-légumes

Un appareil coupe-légumes décrit dans BE - A - 841817 comprend une grille à couteaux, un chemin de guidage pour un légume à couper, un poussoir guidé le long d'un chemin linéaire par des éléments de guidage solidaires du boîtier pressant le légume à travers la grille à couteaux, et un élément allongé actionnant le poussoir, le dit élément allongé étant équipé d'un chemin denté sans fin, accompagné d'une rainure de guidage pour un doigt solidaire d'un pignon, garantissant l'engagement permanent entre le chemin denté et le pignon mû par un moteur-réducteur électrique.

La présente invention a pour but diverses améliorations de l'appareil décrit dans BE - A - 841817, notamment de doter l'appareil coupe-légumes de caractéristiques de robustesse et de précision dans les mouvements de ses parties mobiles, et de caractéristiques de sécurité qui autorisent son emploi dans le ménage. Un autre but de l'invention est une simplification de la conception mécanique.

Suivant l'invention, l'appareil coupe-légumes est caractérise en ce que l'élément allongé est solidarisé rigidement avec le poussoir et est guidé pendant son mouvement le long du chemin linéaire par les éléments de guidage solidaires du boîtier, en ce qu'un plateau de base est monté de manière pivotante dans le boîtier, et en ce que ce plateau de base supporte au moins le pignon d'entraînement de l'élément allongé dont la prolongation de l'axe est introduit dans la rainure de guidage. Si le plateau de base supporte seulement le pignon d'entraînement de l'élément allongé, l'axe de pivotement est coaxial avec l'axe d'une roue dentée entraînant une denture coaxiale avec le pignon d'entraînement. Cependant, le plateau de base pivotant peut supporter non seulement tout le réducteur, mais aussi le moteur. Généralement, le moteur, qui peut tourner à grande vitesse, possède un inertie importante qui peut maintenir un mouvement à vide de relativement grande amplitude après la coupure du courant. Pour éviter un frein, il est possible de prévoir un élément d'interruption de l'effort d'entraînement agissant dans le réducteur, constitué par exemple par un organe déplaçant une roue à engrenage dans la direction de son axe.

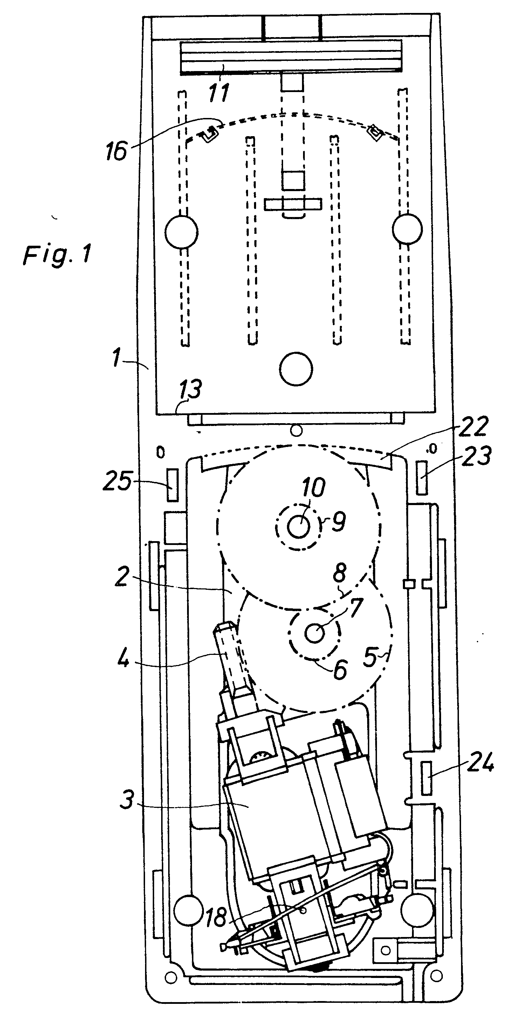

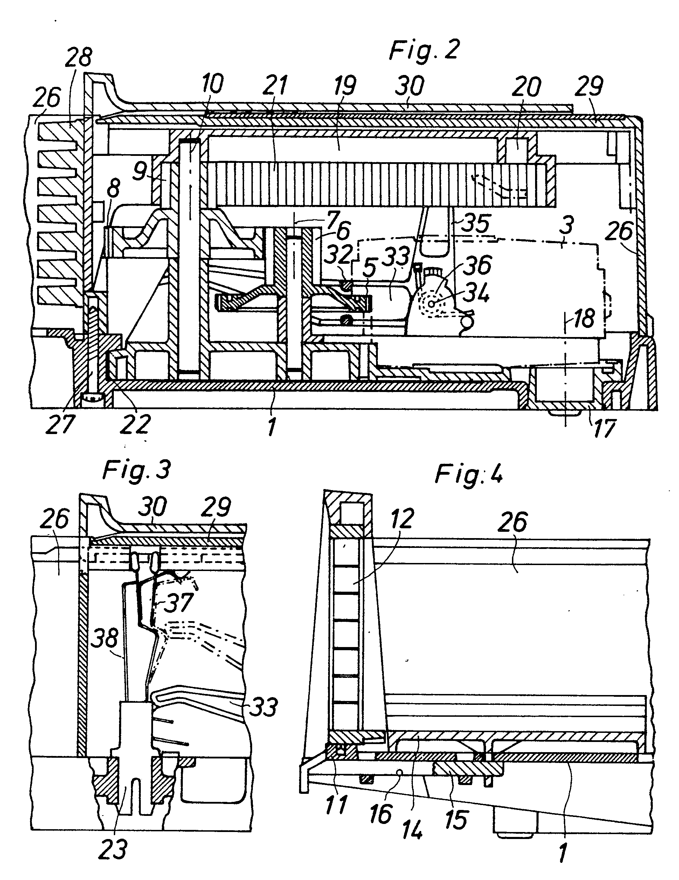

L'invention est expliquée ci-dessous par rapport à un exemple d'une forme d'exécution représenté au dessin annexé. Sur ce dessin, la figure 1 est une vue en plan d'un appareil coupe-légume suivant l'invention parois latérales, couvercle et élément allongé avec poussoir enlevés. Les figures 2, 3, 4 sont des coupes en élévation de parties de l'appareil. Dans toutes les figures du dessin les mêmes références désignent les mêmes éléments.

Le plan de la figure 1 représente un appareil coupe-légumes suivant l'invention, parois latérales, couvercle et poussoir avec élément allongé enlevés. Il subsiste alors un fond de boîtier 1 avec un plateau de base pivotant 2, un moteur électrique 3 avec pignon-moteur hélicoïdal 4, un premier ensemble de roues dentées 5, 6 tournant autour d'un axe 7, et un deuxième ensemble de roues dentées 8, 9 tournant autour d'un axe 10.

A l'avant du fond de boîtier se trouve un élément d'accrochage 11 pour une grille à couteaux. Cette grille à couteaux 12 est montrée à la figure 4. L'espace situé derrière l'élément 11, s'étendant jusqu'à un épaulement 13 du fond du boîtier 1 est garni par un plaque de fond 14 (figure 4) du chemin de guidage pour le légume à couper. Elle est verrouillée dans sa position au moyen d'une cheville 15 insérée dans un oeillet de la plaque 14; La cheville 15 est à son tour retenue par un ressort 16 dont la position est indiquée en pointillé à la figure 1.

Un espace derrière l'épaulement 13 est réservé à la partie moteur de l'appareil. Cet espace renferme le plateau de base 2 dont un pivot 17 (figure 2) permet des mouvements tournants autour d'un axe 18. Le moteur 3 est fixé sur le plateau de base 2 et engrène, au moyen du pignon moteur hélicoïdal 4, avec la denture 5 du premier ensemble de roues dentées 5, 6 d'un réducteur. L'axe 7 de cet ensemble 5, 6 est défini par un arbre fixe solidaire du plateau de base 2. L'ensemble des roues dentées 5, 6 peut non seulement tourner autour de cet arbre, mais aussi se déplacer axialement le long de celui-ci. La denture 6 de l'ensemble de roues dentées 5, 6 engrène avec la denture 8 du deuxième ensemble de roues dentées 8, 9. La denture 9 représente le pignon d'entraînement d'un élément allongé décrit dans BE - A - 841817 et montré en 19 à la figure 2. Cet élément allongé présente une rainure de guidage 20 montrée en coupe à la figure 2 et un chemin denté sans fin 21 dans lequel engrène la denture 9. L'axe 10 autour duquel tourne ce deuxième ensemble de roues dentées 8, 9 est défini par un arbre, fixe ou tournant, maintenu dans le plateau de base 2; son extrémité est introduite dans la rainure du guidage 20. Il se trouve à une distance déterminée relativement importante de l'axe de pivotement 18.

L'extrémité libre du plateau de base 2 est guidée dans une rainure 22 à bords robustes susceptibles d'éviter des torsions du plateau 2 lors de la transmission de grands efforts à partir du moteur 3 vers le pignon d'entraînement 9.

Il vient d'être dit que l'axe 10 du réducteur doit se trouve à une distance convenable de l'axe 18. Cette distance convenable est déterminée par les dimensions du chemin denté 21 de l'élément allongé 19 et doit être choisi suffisamment grande pour ne nécessiter que des pivotements d'un angle relativement faible, compatibles avec la largeur du boîtier de l'appareil.

En variante, il est possible de monter le moteur 3 à station fixe dans le boîtier et de faire engrener le pignon moteur 4 avec une denture d'un réducteur tournant autour d'un axe coïncidant avec l'axe de pivotement 18 du plateau 2. Cette variante, où seulement le réducteur ou une partie du réducteur pivote, tandis que le moteur est fixe, n'est pas représenté sur le dessin.

Le fond du boîtier 1, représenté sur la figure 1, comprend en outre des logements de fixation 23 à 25 pour divers dispositifs auxiliaires.

A la figure 2 une partie supérieure, comprenant les parois latérales 26, est fixée sur le fond 1, par exemple par des vis tels que 27. Un poussoir 28 solidarisé de manière rigide avec l'élément allongé 19 est inséré entre les parois latérales 26, de manière à être guidé suivant un chemin linéaire qui, en l'occurrence, est droit, mais qui pourrait aussi être, par exemple, en arc de cercle, si les parois 26 étaient cintrées. Le fait que le poussoir 28 est relié rigidement à l'élément allongé 19 permet d'obtenir un guidage sur une grande longueur, ce qui évite tout danger de coinçage lorsque de grandes forces doivent être développées par le poussoir. Le guidage de l'élément allongé 19 du côté supérieur est assuré par une partie plafond 29 solidaire des parois latérales 26, interdisant l'accès de la chambre renfermant le moteur et le réducteur. Un couvercle amovible 30 coulissant sur la partie plafond 29 et dans une rainure des parois latérales est en outre prévu. Cette rainure n'est pas visible sur les figures 1 à 4.

Afin de permettre un arrêt instantané du poussoir à la fin d'une phase de travail, un frein ou, selon l'exemple choisi, un dispositif pour interrompre l'effort d'entraînement entre le pignon moteur 4, les roues dentées et le pignon d'entraînement est prévu sous forme d'un organe pivotant, présentant deux pointes 32 de fourchette. Ces pointes 32 apparaissent en coupe sur la figure 2. Ils sont fixés sur un bras de levier 33, pivotable autour d'un axe 34 perpendiculaire à l'axe autour duquel tourne le premier ensemble de roues dentées 5, 6 dont la denture 5 est embrassée par les pointes 32 de la fourchette. Lorsque le levier horizontal 33 est soulevé, par exemple lors d'une poussée en direction arrière sur un bras vertical 35, solidaire du levier 33, le premier ensemble de roues dentées 5, 6 est soulevé ce qui est facilement possible sans dégager les dents de la denture 6 des dents de la denture 8, grâce à la longueur des dents de la denture 6. Lors de ce mouvement, la denture 5 se dégage de celle du pignon moteur hélicoïdal 4, de sorte que l'inertie du moteur ne peut plus entraîner les roues du réducteur et par conséquent l'élément allongé 19 s'arrête.

Le dégagement de la denture 5 du pignon moteur 4 doit avoir lieu à la fin de chaque phase de travail. Une phase de travail comprend une course de poussoir 28 vers l'avant, donc vers la grille à couteaux 12 et le retour vers sa position initiale. Pour assurer que l'élément allongé 19 ou le poussoir 28 qui en est solidaire s'arrête bien à endroit fixe, la commande du débrayage au moyen des pointes 32 est exécuté lorsque le poussoir 28 arrive à sa position arrière de départ. Cette commande du mouvement vers le haut du bras de levier 33 ou ce qui revient au même, la commande du mouvement vers l'arrière du bras de levier 35, à l'encontre d'une force de rappel produite par un ressort 36 est exécutée par un organe mobile, non représenté qui se déplace vers l'arrière simultanément avec le poussoir 28 ou avec l'élément allongé 19; à la limite, cet organe mobile peut être le poussoir 28 ou l'élément allongé lui-même.

Au moment de l'enclenchement d'une phase de travail, les pointes 32 de fourchette et par conséquent aussi le bras 33 doivent s'abaisser pour permettre l'insertion de la denture 5 entre le pignon hélicoïdal 4 et la denture 8. Ce mouvement d'embrayage dû à l'abaissement du bras 33 s'effectue sous l'influence de la force de rappel produite par le ressort 36. Il n'est permis que dans le cas où une lame de contact mobile 37 (figure 3) se déplace de sa position ouverte vers sa position fermée où elle établit une liaison électrique avec une lame de contact fixe 38. De cette manière, l'embrayage du réducteur de l'appareil est assuré facilement et sûrement, simultanément avec le démarrage du moteur.

**Revendications**

1. Appareil coupe-légumes comprenant une grille à couteaux (12), un chemin de guidage pour un légume à couper (14), un poussoir (28) guidé le long d'un chemin linéaire par des éléments de guidage solidaires du boîtier pressant le légume à travers la grille à couteaux (12), un élément allongé (19) actionnant le poussoir (28), le dit élément allongé (19) étant équipé d'un chemin denté (21) sans fin accompagné d'une rainure (20) de guidage pour un doigt (10) coaxial avec un pignon (9), garantissant l'engagement permanent entre le chemin denté (21) et le pignon (9) mû par un moteur (3) électrique, caractérisé en ce que l'élément allongé (19) est solidarisé rigidement avec le poussoir (28) et est guidé le long du chemin linéaire par les éléments de guidage solidaires du boîtier (1), en ce qu'un plateau de base (2) est monté de manière pivotante dans le boîtier (1) et en ce que ce plateau de base (2) supporte au moins le pignon d'entraînement (9) de l'élément allongé dont la prolongation de l'axe (10) est introduite dans la rainure de guidage (20).

2. Appareil suivant la revendication 1, caractérisé en ce que le plateau de base (2) pivotant supporte aussi le moteur (3).

3. Appareil suivant la revendication 1, caractérisé en ce que le pivot (17) du plateau de base (2) est coaxial avec un axe de roue denté d'un réducteur et en ce que le moteur est monté à station fixe dans le boîtier (1).

4. Appareil suivant une des revendications précédentes, caractérisé en ce qu'un élément d'interruption (32) de l'effort d'entraînement agissant sur un élément entre le moteur (3) et le pignon d'entraînement (9) de l'élément allongé (19) est constitué par un organe déplaçant une roue à engrenage dans la direction de son axe (7).

5. Appareil suivant la revendication 4, caractérisé en ce que le mouvement de l'organe (32) déplaçant la roue à engrenage (5) est commandé en vue du débrayage, par un élément solidarisé au moins temporairement avec le poussoir (28) ou avec l'élément allongé (19).

6. Appareil suivant une des revendications 4 ou 5, caractérisé en ce que le mouvement de l'organe (32) déplaçant la roue à engrenage est commandé en vue de l'embrayage, par un élément, au moins temporairement solidaire d'un contact mobile (37) mettant sous tension électrique le moteur (3).

## Claims

1. Vegetable cutter comprising a grid of knives (12), a guide track (14) for a vegetable to be cut, a push element (28) guided along a linear track by guide elements fast with the casing, pressing the vegetable through the grid of knives (12), and an elongate element (19) actuating the push element (28), the said elongate element (19) being equipped with an endless toothed track (21) accompanied by a guide groove (20) for a finger (10) coaxial with a pinion (9), ensuring permanent engagement between the toothed track (21) and the pinion (9) driven by an electric motor (3), characterised in that the elongate element (19) is rigidly fixed to the push element (28) and is guided along the linear track by the guide element fast with the casing (1), in that a baseplate (2) is mounted so as to pivot in the casing (1), and in that this baseplate (2) supports at least the drive pinion (9) of the elongate element of which the extension of the axis (10) is introduced into the guide groove (20).

2. Vegetable cutter according to Claim 1, characterised in that the pivoting baseplate (2) also supports the motor (3).

3. Vegetable cutter according to claim 1, characterised in that the pivot (17) of the baseplate (2) is coaxial with a toothed wheel-axle of a step-down gear, and in that the motor is mounted in a fixed position in the casing (1).

4. Vegetable cutter according to one of the preceding claims, characterised in that an element (32) for interrupting the drive force acting on an element between the motor (3) and the drive pinion (9) of the elongate element (19) consists of a member which displaces a gearwheel in the direction of its axis (7).

5. Vegetable cutter according to Claim 4, characterised in that the movement of the member (32) displacing the gearwheel (5) is controlled, for disengagement, by an element which is at least temporarily rendered fast with the push element (28) or with the elongate element (19).

6. Vegetable cutter according to one of Claims 4 or 5, characterised in that the movement of the member (32) displacing the gearwheel is controlled, for engagement, by an element which is at least temporarily fast with a movable contact (37) which applies an electrical voltage to the motor (3).

## Patentansprüche

1. Gemüseschneidemaschine mit einem Gittermesser (12), einem Führungskanal (14) für das zu schneidende Gemüse, einem längs einer geradlinigen Bahn von gehäusefesten Führungselementen geführten Stößel (28), der das Gemüse durch das Gittermesser (12) drückt, einem länglichen Element (19), das den Stößel (28) betätigt, wobei das längliche Element (19) mit einer endlosen gezahnten Bahn (21) versehen und von einer Führungsnut (20) für einen Zapfen (10) begleitet ist, der koaxial zu einem Ritzel (9) verläuft, was den ständigen Eingriff zwischen der gezahnten Bahn (21) und dem von einem Elektromotor (3) angetriebenen Ritzel (9) gewährleistet, dadurch gekennzeichnet, daß das längliche Element (19) starr mit dem Stößel (28) verbunden und längs der geradlinigen Bahn von den fest am Gehäuse (1) angebrachten Führungselementen geführt ist, daß eine Grundplatte (2) drehbar in dem Gehäuse (1) gelagert ist und daß die Grundplatte (2) mindestens das das längliche Element antreibende Ritzel (9) trägt, bei dem die Verlängerung der Achse (10) in die Führungsnut (20) eingeführt ist.

2. Maschine nach Anspruch 1, dadurch gekennzeichnet, daß die drehbare Grundplatte (2) auch den Motor (3) trägt.

3. Maschine nach Anspruch 1, dadurch gekennzeichnet, daß der Drehpunkt (17) der Grundplatte (2) koaxial zur Achse eines Zahnrades eines Reduktionsgetriebes liegt und daß der Motor an einer festen Stelle im Gehäuse (1) angebracht ist.

4. Maschine nach einem der vorhergehenden Ansprüche, dadurch gekennzeichnet, daß ein Unterbrechungselement (32) zur Unterbrechung der Antriebskraft, das auf ein Element zwischen dem Motor (3) und dem das längliche Element (19) antreibenden Ritzel (9) einwirkt, von einem Organ gebildet ist, das ein Getriebezahnrad in Richtung seiner Achse (7) verschiebt.

5. Maschine nach Anspruch 4, dadurch gekennzeichnet, daß die Bewegung des das Getriebezahnrad (5) verschiebenden Organs (32) zum Auskuppeln von einem Element gesteuert ist, das zumindest zeitweise mit dem Stößel (28) oder mit dem länglichen Element (19) fest verbunden ist.

6. Maschine nach Anspruch 4 oder 5, dadurch gekennzeichnet, daß die Bewegung des das Getriebezahnrad verschiebenden Organs (32) zum Einkuppeln von einem Element gesteuert ist, das zumindest zeitweise fest mit einem beweglichen Kontakt (37) verbunden ist, der den Motor (3) an eine elektrische Spannung anlegt.

Fig. 1

0 002 092

Fig. 2

Fig. 3

Fig. 4